# EUROPEAN PATENT APPLICATION

(11) **EP 1 582 563 A1**
(43) Date of publication of application: **05.10.2005**
(21) Application number: 04101329.3
(22) Date of filing: 31.03.2004
(51) Int. Cl.: C08L 53/02, C08L 23/26, C08L 23/00, C09D 125/10

(54) **Hydrogenated styrenic block copolymer compositions with improved high temperature overmolding properties**

(71) Applicant: KRATON Polymers Research B.V., 1031 CM Amsterdam (NL)
(72) Inventor: Maris, Catherine A.L., 1348 OTTIGNIES, Louvain-la-Neuve (BE); Coignoul, Emmanuelle, 1348 Ittugbues Louvain-La-Neuve (BE)
(74) Representative: Kortekaas, Marcel C.J.A.

(57) **Abstract**

A hydrogenated styrenic block copolymer composition for overmolding onto a polar substrate is provided, comprising:
a) 100 pbw of a hydrogenated styrenic block copolymer having at least two resinous endblocks of polymerized monovinyl arene and an elastomeric midblock of polymerized and subsequently hydrogenated conjugated diene or dienes,
b) from 25 to 60 pbw of a functionalized polyolefin, and optionally
c) from 0 to 100 pbw of a plasticizer,
d) from 0 to 200 pbw of one or more fillers and filler deactivators,
e) from 0 to 2 pbw of antioxidants,
f) from 0 to 100 pbw of a polar engineering thermoplast,
wherein component (a) is a linear hydrogenated styrenic block copolymer having an apparent molecular weight in the range of from 200,000 to 500,000 or a radial hydrogenated styrenic block copolymer having an apparent molecular weight in the range of from n times 100,000 to 250,000, n equals the number of polymer arms, and component (a) has a content of hydrogenated 1,2-polymerized conjugated dienes (vinyl content) of greater than 40% and a content of poly(monovinyl arene) in the range of from 20 to 50%,and component (b) is an acid, anhydride or ester functionalized polyolefin having a grafting level of 0.5 to 5%w and a melt flow rate (MFR, ASTM D 1238-95 at Condition L) equal to or greater than 20 g/10 minutes.

## Description

### Background Art

Thermoplastic elastomer compositions for overmolding on polar substrates such as polyesters and polyamides are known. Examples of such compositions may be found in e.g., **US 5723543 , EP 0832931 , EP 0718347 ,** or **US 5750268** . More recently, systems have been developed on the bases of functionalized hydrogenated styrenic block copolymers, as described in **EP 0771846 .**

Hydrogenated styrenic block copolymers, such as the KRATON® G polymers, and functionalized hydrogenated styrenic block copolymers, such as the KRATON® FG polymers, and compositions based thereon are highly suitable for overmolding applications and offer, amongst other features, extremely good grip. Polyamide 6 (PA-6) is extensively used in industrial applications. Formulations have been successfully developed for this substrate, offering a good balance of mechanical properties. However, high temperature performance is lacking.

The automotive area is an important outlet for PA polymers and requires good high temperature properties. It would therefore be desirable to have a composition for overmolding onto e.g. PA-6 with a suitable balance of properties, i.e., a Shore A hardness of 40 to 80 (ISO 868), adhesion values for 2 mm thick plates above 10 N (Renault D41 1916 test on a Zwick mechanical tester), compression set below 40% (ISO 815; at 70°C after 24 hours) and still adhering to the substrate after aging at 70°C.

It is an object of the present invention to provide compositions combining these properties.

### Disclosure of Invention"

Accordingly a composition is provided which can be used for overmolding onto a polar substrate, comprising:
a) 100 parts by weight (pbw) of a hydrogenated styrenic block copolymer having at least two resinous endblocks of polymerized monovinyl arene and an elastomeric midblock comprizing polymerized and subsequently hydrogenated conjugated diene or dienes,
b) from 25 to 60 pbw of a functionalized polyolefin, and optionally
c) from 0 to 100 pbw of a plasticizer,
d) from 0 to 200 pbw of one or more fillers and filler deactivators, and
e) from 0 to 2 pbw of antioxidants,
f) from 0 to 100 pbw of a polar engineering thermoplast,
wherein component (a) is a linear hydrogenated styrenic block copolymer having an apparent molecular weight in the range of from 200,000 to 500,000 or a radial hydrogenated styrenic block copolymer having an apparent molecular weight in the range of from n times 100,000 to 250,000, n equals the number of polymer arms, and component (a) has a content of hydrogenated, 1,2-polymerized conjugated dienes (vinyl content) of greater than 40% and a content of poly(monovinyl arene) in the range of from 20 to 50%, and component (b) is an acid, anhydride or ester functionalized polyolefin having a level of functionality of 0.1 to 5 %w and a melt flow rate (MFR, ASTM D 1238-95, Condition L) equal to or greater than 20 g/10 minutes.

It will be appreciated that another aspect of the invention is formed by overmolded articles (sometimes referred to as composite materials) comprising the above composition molded onto a polar substrate, in particular polyamide, more particularly PA-6.

### Mode(s) for Carrying Out the Invention

Hydrogenated styrenic block copolymers are known in the art. By styrenic block copolymer is meant a block copolymer having at least two end-blocks A made of polymerized monovinyl arene, thus giving a glassy, (resinous) aromatic segment, and a mid-block B made up at least 50% of polymerized diene, thus giving an amorphous elastomeric segment. The polymers can be linear, as in A-B-A and A-B-A-B, but also radial, such as in (A-B)ₙ X, or mixtures thereof. Some A-B diblock polymer can be present up to an amount of 30% by weight or less. Generally, 20% by weight percent or less of the block copolymer is diblock, and it is preferred to have essentially no diblock. In the above radial formula the n is an integer of at least 3, generally 3 to 50, more generally 6 to 13, and the X is the remnant of a coupling agent or multifunctional monomer such as divinylbenzene.

The A-B-A compositions can be made by either sequential polymerization or coupling. In the sequential polymerization technique, the monovinyl arene is first introduced to produce an aromatic block followed by the introduction of the conjugated diene to produce the rubbery midblock followed by additional monovinyl arene to produce the other terminal aromatic block. This is broadly disclosed in **US 3231635**. The production of such polymers and also radial polymers is broadly disclosed in **US 5194530**. Another patent broadly disclosing the anionic polymerization of thermoplastic elastomers using an organo alkali metal initiator is **US 4764572** .

The aromatic component can be any 8-30 carbon atom monoalkenyl aromatic compound or mixture thereof, such as styrene and substituted styrenes such as alpha-methyl-styrene and 1,1-diphenyl-ethene, but preferably is styrene.

The diene can be any 4 to 8 carbon atom conjugated diene or mixtures thereof but is preferably 1,3-butadiene or isoprene, most preferably 1,3-butadiene.

When the diene is butadiene the polymerization may be carried out using a polar compound as is known in the art to give increased levels of vinyl.

It is well known in the art to drive the polymerization toward the 1,2-addition of butadiene. Broadly, this can be done by utilizing an organic polar compound such as an ether, including cyclic ethers, polyethers and thioethers or an amine including secondary and tertiary amines. Preferred are chelating ethers and amines. By chelating ether is meant an ether having more than one oxygen as exemplified by the formula R(OR')ₘ (OR")ₒ OR where each R is individually selected from 1 to 8, preferably 2 to 3, carbon atom alkyl radicals; R' and R" are individually selected from 1 to 6, preferably 2 to 3, carbon atom alkylene radicals; and m and o are independently selected integers of 1-3, preferably 1-2. One of m or o can be zero. Examples of preferred ethers include diethoxypropane, 1,2-dioxyethane (dioxo) and 1,2-dimethyoxyethane (glyme). Other suitable materials include CH₃ -OCH₂ -CH₂ -OCH₂ -CH₂ -OCH₃ (diglyme) and CH₃ CH₂ -OCH₂ -CH₂-OCH₂ -CH₂ -OCH₂ -CH₃ . By chelating amine is meant an amine having more than 1 nitrogen such as N,N,N',N'-tetramethylethylene diamine. Monoamines are operable but less preferred. Less preferred also (but still operable) are straight chain and cyclic monoethers such as dimethylether, diethylether, anisole, and tetrahydrofuran.

This microstructure promoter is used in an amount of at least 0.1 moles per mole of organo alkalimetal initiator, such as an organolithium initiator, preferably 1-50, more preferably 2-25, moles of promoter per mole of the initiator. Alternatively, the concentration can be expressed in parts per million by weight based on the total weight of solvent and monomer. Based on this criteria from 10 parts per million to about 1 weight percent, preferably 100 parts per million to 2000 parts per million are used. This can vary widely, however, since extremely small amounts of some of the preferred promoters are very effective. At the other extreme, particularly with less effective promoters, the promoter itself can be the solvent. Again, these techniques are well known in the art, disclosed for instance in **US 3686366 , US 3700748 and US 5194535 .**

The resulting 1,2-vinyl content for the polymers useful in this invention is at least 40 mole percent, preferably at most 90, more preferably at least **50**, even more preferably 65-90, most preferably 65-80 mole percent.

The styrenic block copolymer as it is actually used in this invention is hydrogenated and hence there is little or no vinyl unsaturation left. Nonetheless, it is still a high 1,2 addition polymer (from a high vinyl precursor). Even the hydrogenated product is typically referred to as "high vinyl" because of its origin.

The styrenic block copolymers utilized in the compositions of this invention are saturated polymers in the sense that they contain little or no aliphatic unsaturation. Generally, the styrenic block copolymers as produced contain aliphatic unsaturation and are selectively hydrogenated so as to remove most of the aliphatic unsaturation in the polymer backbone. By selective hydrogenation is meant that the aliphatic unsaturation is significantly removed while leaving unaffected most of the aromatic unsaturation. Suitable known catalysts for accomplishing this include nickel compounds in combination with a reducing agent such as an aluminum alkyl. Hydrogenation is taught in **US 3634549 , US 3670054 , US 3700633 and US RE27145E .**

Each individual aromatic endblock must have a molecular weight of less than 20,000. Preferably the endblocks have a molecular weight within the range of 5,000 to 20,000, most preferably 5,000 to 15,000.

The molecular weight of the copolymer will generally be at least 200,000. For linear A-B-A polymers, the molecular weight will generally be within the range of 200,000 to 500,000. Actually, the upper limit is dictated by viscosity considerations and can be as high as can be tolerated and still be processable. The most preferred molecular weight for linear A-B-A polymers is 250,000 to 350,000. With radial polymers, the molecular weight can be much higher since these polymers have a lower viscosity for a given total molecular weight. In general, it is easier to refer to the molecular weight of the arms, which will be half of the molecular weight discussed for linear A-B-A discussed above. Thus, for radial polymers having about 4 arms, the molecular weight generally will be in the range of 400,000 to 1 million, preferably 500,000 to 700,000. These polymers are generally referred to as high MW polymers.

For the composition of the invention, the nature of the monomers or the linearity is not a very determining factor. What is important is that a polymer is used having a relatively high molecular weight in combination with a relatively high vinyl content (.e.g., the percentage of conjugated butadiene built into the polymer backbone by 1,2-addition rather than 1,4-addition, or similar in case of a higher conjugated diene), and a content of poly(monovinyl arene) in the range of from 20 to 50%.

The apparent molecular weights of the complete block copolymers and each of the intermediate precursors have been determined by Gel Permeation Chromatography, and expressed in terms of standard poly(styrene) (analogous to the method described in ASTM D5296-97).

Block copolymers utilized in this invention, which are hydrogenated to remove the aliphatic unsaturation as noted hereinabove, can be viewed for instance in the case of butadiene as S-EB-S polymers, the S referring to the monovinyl arene, generally styrene, endblocks. The EB represents ethylene/butylene which is the structure resulting from the hydrogenation of polymerized 1,3-butadiene. With isoprene the designation would be S-EP-S, the EP representing ethylene/propylene.

Such copolymers are commercially available as, for instance, KRATON® G polymers.

### Component (b)

The functionalized polyolefins can be homopolymers of alpha-olefins such as ethylene, propylene, 1-butene, 1-hexene, and 4-methyl-1-pentene, and copolymers of ethylene with one or more alpha-olefins. Preferable among the polyolefins are low-density polyethylene, linear low-density polyethylene, medium- and high-density polyethylene, polypropylene, and propylene-ethylene random or block copolymers.

The functionalized polyolefins contain one or more functional groups which have been incorporated during polymerization. However they are preferably polymers onto which the functional groups have been grafted. Such functional group-forming monomers are preferably carboxylic acids, dicarboxylic acids or their derivatives such as their anhydrides.

Examples of the unsaturated carboxylic acids, dicarboxylic acids which may be present in the functionalized polyolefin are those having about 3 to about 20 carbon atoms per molecule such as acrylic acid, methacrylic acid, maleic acid, fumaric acid and itaconic acid.

Unsaturated dicarboxylic acids having from 4 to 10 carbon atoms per molecule are the especially preferred grafting monomers, as are the anhydrides of said acids. These grafting monomers include for example, maleic acid, fumaric acid, itaconic acid, citraconic acid, cyclohex-4-ene-1,2-dicarboxylic acid, bicycle[2.2.1]hept-5-ene-2,3-dicarboxylic acid, maleic anhydride, itaconic anhydride, citraconic anhydride, allylsuccinic anhydride, 4-methylcyclohex-4-ene-1,2-dicarboxylic anhydride and bicycle[2.2.1]hept-5-ene-2,3-dicarboxylic anhydride.

Further grafting monomers are epoxy-group containing esters of unsaturated carboxylic acids containing at least about 6, preferably about 7 carbon atoms. Particularly preferred are glycidyl acrylate and glycidyl methacrylate.

Various known methods can be used to graft the grafting monomer to the basic polymer. For example, this can be achieved by heating the polymer and the grafting monomer at high temperatures of from 150 to 300 °C in the presence or absence of a solvent with or without a radical initiator. Another vinyl monomer may be present during the grafting reaction. Suitable solvents that may be used in this reaction include benzene, toluene, xylene, chlorobenzene and cumene. Suitable radical initiators that may be used include t-butyl hydroperoxide, diisopropylbenzene hydroperoxide, di-t-butyl peroxide, t-butyl cumyl peroxide, acetyl peroxide, benzoyl peroxide, isobutyryl peroxide and methyl ethyl ketone peroxide.

In the functionalized polyolefin thus obtained, the amount of the acid or anhydride is preferably from 0.2 to 5 %, more preferably from 0.5 to 4% by weight, based on the weight of the functional polyolefin.

Preferably, these functionalized polyolefins have a melt flow rate equal to or greater than 20 g/10 minutes. More preferably, these functionalized polyolefins have a MFR of from 35 to 300 g/10 minutes, most preferably from 40 to 200 g/10 minutes (ASTM D 1238-95, Condition L).

Suitable examples of functionalized polyolefins include QESTRON™ KA805A, a maleic anhydride functionalized polypropylene having a MFR of 50 g/10 min.; and QESTRON KA802A, with a MFR of 35 g/10 min; both having a maleic acid content of about 1%, and EXXELOR™ PO1020 a maleic anhydride functionalized polypropylene (0.6-0.80% MA) having a MFR greater than 200 g/10 min. (Basell is replacing the trademark QESTRON by the trademark HIFAX™).

The more preferred component (b) is HIFAX KA805A.

The composition preferably comprises from 30 to 50 pbw of component (b).

### Component (c)

Suitable plasticizers include plasticizing oils like low aromatic content hydrocarbon oils that are paraffinic or naphthenic in character (carbon aromatic distribution < 5%, preferably < 2%, more preferably 0% as determined according to DIN 51378). Those products are commercially available from the Royal Dutch/Shell Group of companies, like SHELLFLEX ™, CATENEX™, and ONDINA™ oils. Other oils include KAYDOL™ oil from Witco, or TUFFLO™ oils from Arco or PRIMOL™ oils from EXXON-MOBIL.

Other plasticizers may also be added, like olefin oligomers; low molecular weight polymers (< 30,000 g/mol) like liquid polybutene, liquid polyisoprene copolymers, liquid styrene/isoprene copolymers or liquid hydrogenated styrene/conjugated diene copolymers; vegetable oils and their derivatives; or paraffin and microcrystalline waxes.

Plasticizers such as paraffinic oils which may be used in the composition according to the present invention should be capable of being melt processed with other components of the composition without degrading.

More preferably the plasticizer represents a plasticizing oil selected from paraffinic or naphtenic oils, in an amount of from 0 to 80 pbw, relative to 100 pbw of component (a).

### Component (d)

It is known in the art that various other components can be added to manage the overall economics of the overmolded article such as fillers. Examples of such fillers include DURCAL™ 5, a calcium carbonate from Omya, and ANKERMAG™ B20, a magnesium oxide from Magnifin. These fillers are typically used in combination with filler deactivators, such as EPON™ 1004, an epoxy compound. These fillers may be present in an amount of from 0 to 200 parts by weight, preferably from 50 to 150 pbw per 100 parts of component (a). (The amount of filler deactivator is typically about 1 to 2% by weight of the filler).

### Antioxidants

Antioxidants and other stabilizing ingredients can also be added to protect the composition of the present invention from degradation induced by heat, light and processing or during storage.

Several types of antioxidants can be used, either primary antioxidants like hindered phenols or secondary antioxidants like phosphite derivatives or blends thereof. Particularly preferred is IRGANOX™ 1010 alone or in combination with IRGANOX PS800. These antioxidants are generally present in an amount within the range of 0.01 to 4, preferably 0.1 to 1 pbw per 100 parts of component (a).

### Component (f)

As is known from **EP 771846 ,** the block copolymer compositions preferably contain a polar engineering thermoplast. Suitable polar engineering thermoplasts which can be applied as component (f) may be selected from polyamide such as NYLON 6,6 (PA-6,6), NYLON 6 (PA-6), polycarbonates (PC), polymethylmethacrylate (PMMA) and polyester derived from an aromatic acid such as polyethylenetherephthalate (PET), polypropyleneterephthalate (PPT) and polybutyleneterephthalate (PBT) or any combination thereof. Such engineering thermoplasts can optionally be mixed with polyurethane resins such as VANDAR™, polycarbonates and modified polycarbonates. Polycarbonates are the preferred polar engineering thermoplasts.

### Additional auxiliaries

Other ingredients which do not affect the essential elastomeric characteristics of the composition may be present as well. Such ingredients include pigments, fragrances, flame retardants, surfactants, waxes, flow promoters such as for instance KRISTALLEX™ 3115, solvents, and materials added to enhance processability and pellet handling of the composition.

### Preparation of the composition

No particular limitation is imposed on the preparation process of the compositions according to the present invention.

Therefore, there may be used any process such as a twin-screw extruder thereby obtaining an intimate solution of the composition aimed at.

### Use of the composition

The composition according to the present invention is used for overmolding onto hard substrates, grips, medical articles like medical tubing and other rubbery articles, in particular onto a polar substrate. This technology is known and described in for instance WO 98/01506.

More in particular the composition shows an improved balance of high temperature properties when overmolded onto PA-6, i.e. cohesive failure with high bond strength in combination with a compression set of at most 40% measured at 70°C/24 hours.

The present invention will hereinafter be described more specifically by reference to the following examples and comparative examples, however without restricting its scope to these specific embodiments.

Incidentally, all designations of "parts" and "%" as will be used in the following examples mean parts by weight and wt% unless expressly noted otherwise.

### Examples

Details of the ingredients used in the examples can be found in Table 1.

**Table 1**

| Trade name | Details (Supplier) |
|---|---|
| SEBS-1 | styrene-ethylene/butylene-styrene block copolymer, linear, MW of ~190,000, 31% PSC |
| SEBS-2 | S-E/B-S, block copolymer, linear, about 70% 1,2 BD, MW of -290,000, 32% PSC |
| F-SEBS | S-E/B-S, block copolymer, 1.7% w maleic anhydride (MA) functionalized, linear, MW of -80,000, 30% PSC |
| PA-6 | Polyamide 6 (ULTRAMID™ B3, BASF) |
| PC | Polycarbonate (LEXAN™ 141R, GE Plastics) |
| LOTADER™ 3200 | COMPARATIVE: ethylene/acrylic ester/maleic anhydride terpolymer, 9% acrylic ester and MA comonomers, AtoFina |
| QESTRON KA 805A | PP copolymer, MA functionalised (1%), MFR (230°C/ 2.16 kg) = 50 g/10 min, Basell (now HIFAX™ KA 805A) |
| ADMER™ QF551 E | COMPARATIVE adhesive resin', PP type, MFR (230°C/2.16 kg) = 6 g/10 min, Mitsui Chemicals |
| EXXELOR™ PO 1020 | MA functionalised PP homopolymer, MFR (230°C/2.16 kg) > 200 g/10 min, ExxonMobil |
| PRIMOL™ 352 | paraffinic oil, Esso |
| KRISTALLEX™ 3115 | hydrocarbon resin, R&B softening point = 115°C, Hercules |
| CaCO₃ | calcium carbonate (DURCAL™ 5, Omya) |
| EPON™ 1004 | epoxy resin, Shell |
| AO | 50/50 w/w blend of IRGANOX™ 1010, a hindered phenol, primary anti-oxidant, IRGANOX PS800 a secondary antioxidant, both from Ciba-Geigy |

Prior to use, the ingredients (PA-6, styrenic block copolymer) are dried overnight at 70°C or for 4 hours at 80°C in a vacuum oven.

Compositions for the preparation of overmolded substrates were prepared on a 25 mm, co-rotating twin screw extruder. Overmolding is done on a Demag dual barrel injection molding machine, equipped with an Axxicon mold. PA-6 plaques with thickness of 2 mm are molded, then the softer material is overmolded onto it.

### Test methods

- Melt flow rate (MFR): ASTM D 1238-95 (Condition L: 230°C, 2.16 kg)
- The adhesion between the hard and soft plaques is determined by performing the Renault D41 1916 test on a Zwick mechanical tester. The soft plaque is cut to a width of 15 mm. The PA-6 plate is inserted into a moving clamp while the SEBS based composition is clamped into a fixed part, with an angle of 90°. A test speed of 100 mm/minute is used and the distance between the upper part of the rigid plate and the clamp is of 50 mm.
- The same 2 mm thick plaques are used for determination of the hardness (ISO 868) of the compositions.
- Samples for measurements of the compression set are prepared using a Battenfeld injection moulder.
- Compression set was measured for 24 hours at 70°C, following method ISO 815.

### RESULTS AND DISCUSSION

The relevant physical properties of the compositions have been specified in Tables 2 and 3. It will be appreciated from the results in Table 3 that compositions E1 and E2, provide high temperature performance, that is lacking in the comparative samples.

For adhesion onto polar substrates like PA-6, polarity is needed. To simulate compositions as might be formulated by commercial compounders a number of SEBS/F-SEBS compositions were developed for overmolding onto PA-6. The compression set performances thereof were found to be poor.

A 40/60 w/w SEBS/F-SEBS based composition, based on **EP 0771846 A** exhibiting the best adhesion onto PA-6 was taken as starting point for further developments. This composition is coded A.

As can be seen from Table 2, replacing SEBS-1/F-SEBS in formulation A by SEBS-2 (formulation C1) decreases hardness and improves compression set at 70°C from 96% to 60-65%. However, adhesion on PA-6 is lost.

Formulation C2 comprises LOTADER, whose degree of functionality is too high. Formulation C3 comprises ADMER, whose MFR is too low. The results of the compositions so obtained are not good enough.

For formulations based on SEBS-2/PC/filler, the QESTRON and EXXELOR PO 1020 grades are providing compositions with compression set values of 30-35% combined with adhesion to PA-6. Composition E2, containing QESTRON KA 805A, is giving a cohesive failure with high peeling force (-20 N/2mm) when performing the Renault test on PA-6. This is the best composition developed in this study. This QESTRON grade combines polarity and excellent flow. Note that the use of this grade at 20 pbw, Comparative formulation C4, does not provide adequate adhesion.

### SUMMARY AND CONCLUSIONS

From the compositions evaluated for overmolding onto PA-6, it can be concluded that:

Compositions comprising functionalized hydrogenated block copolymers are not meeting the compression set requirements of the automotive industry.

Replacement of F-SEBS by unfunctionalized, high MW SEBS-2 improves compression set but gives compositions lacking adhesion on PA-6.

The use of EXXELOR PO 1020 (a functionalized PP homopolymer), in combination with SEBS-2 is leading to formulations with adequate compression set and some level of adhesion to PA-6. This composition E1 could be useful for applications where compression set is important.

A cohesive failure mode with high bond strength (~ 20 N) is obtained with a formulation containing SEBS-2 and QUESTRON KA805A (a functionalized PP copolymer). A compression set of 35% is measured at 70°C/24h. This formulation thus meets the requirements set for this project.

**Table 2**

| | **A** | **C1** | **C2** | **C3** |
|---|---|---|---|---|
| **Formulations:** | 40 | - | - | - |
| | - | 100 | 100 | 100 |
| SEBS-1 | 60 | - | - | - |
| | 67 | 67 | 67 | 67 |
| SEBS-2 | 100 | 100 | 100 | 100 |
| | 1 | 1 | 1 | 1 |
| F-SEBS | 20 | 20 | 20 | 20 |
| | 20 | 20 | - | - |
| PRIMOL 352 | - | - | 30 | - |
| CaCO₃ | - | - | - | 30 |
| EPON | 0.4 | 0.4 | 0.4 | 0.4 |
| 1004 | | | | |
| LEXAN | | | | |
| 141R | | | | |
| KRISTALLEX | | | | |
| 3115 | | | | |
| LOTADER 3 | | | | |
| 3200 | | | | |
| ADMER | | | | |
| QF551E | | | | |
| AO | | | | |
| **Properties:** | 55 | 48 | 63 | 65 |
| | 96 | 60-65 | 45 | 39 |
| Hardness, Shore A, 0 s | | | | |
| Compression set (70°C/24 h), % | | | | |
| **Adhesion** | 16 | 4 | 2 | No. |
| **onto PA-6:** | 22 | 5 | 2 | adh. |
| Average peeling force, N | | | | |
| F. | | | | |
| max., N | | | | |

**Table 3**

| | **1** | **C4** | **2** |
|---|---|---|---|
| **Formulations:** | - | - | - |
| SEBS-1 | 100 | 100 | 100 |
| SEBS-2 | - | - | - |
| F-SEBS | 67 | 67 | 67 |
| PRIMOL | 100 | 100 | 100 |
| 352 | 1 | 1 | 1 |
| CaCO₃ | 20 | 20 | 20 |
| EPON | 30 | - | - |
| 1004 | - | 20 | 30 |
| LEXAN | 0.4 | 0.4 | 0.4 |
| 141R | | | |
| EXXELOR | | | |
| PO 1020 | | | |
| QESTRON | | | |
| KA 805A | | | |
| AO | | | |
| **Properties:** | 71 | 60 | 65 |
| Hardness, | 39 | 44 | 35 |
| Shore A, 0 s | | | |
| Compression set (70°C/24 h), % | | | |
| **Adhesion onto** | 13 | 5 | 19 |
| **PA-6:** | 16 | 6 | 21 |
| Average | | | |
| peeling force, N | | | |
| F. max., N | | | |

### Technical Field

The present invention relates to hydrogenated styrenic block copolymer compositions with improved high temperature overmolding properties when applied onto polar substrates. More in particular the invention relates to styrenic block copolymer compositions combining improved cohesive failure properties in combination with improved compression set properties.

## Claims

1. A hydrogenated styrenic block copolymer composition for overmolding onto a polar substrate, comprising:
a) 100 pbw of a hydrogenated styrenic block copolymer having at least two resinous endblocks of polymerized monovinyl arene and an elastomeric midblock of polymerized and subsequently hydrogenated conjugated diene or dienes,
b) from 25 to 60 pbw of a functionalized polyolefin, and optionally
c) from 0 to 100 pbw of a plasticizer,
d) from 0 to 200 pbw of one or more fillers and filler deactivators,
e) from 0 to 2 pbw of antioxidants,
f) from 0 to 100 pbw of a polar engineering thermoplast,
**wherein** component (a) is a linear hydrogenated styrenic block copolymer having an apparent molecular weight in the range of from 200,000 to 500,000 or a radial hydrogenated styrenic block copolymer having an apparent molecular weight in the range of from n times 100,000 to 250,000, n equals the number of polymer arms, and component (a) has a content of hydrogenated 1,2-polymerized conjugated dienes (vinyl content) of greater than 40% and a content of poly(monovinyl arene) in the range of from 20 to 50%,and component (b) is an acid, anhydride or ester functionalized polyolefin having a grafting level of 0.5 to 5%w and a melt flow rate (MFR, ASTM D 1238-95 at Condition L) equal to or greater than 20 g/10 minutes.

2. A composition as claimed in claim 1, wherein the component (b) has an MFR of 35-300 g/10 minutes.

3. A composition as claimed in claim 1, wherein the component (b) has an MFR of 40-200 g/10 minutes.

4. A plastic article comprising a hydrogenated styrenic block copolymer as claimed in any one of claims 1 to 3, overmolded onto a polar substrate.

5. A plastic article as claimed in claim 4, wherein the polar substrate is a polyamide.
